# EUROPÄISCHE PATENTSCHRIFT

(11) **EP 3 593 192 B1**
(45) Veröffentlichungstag und Bekanntmachung des Hinweises auf die Patenterteilung: **29.03.2023**
(21) Anmeldenummer: 18712087.8
(22) Anmeldetag: 02.03.2018
(51) Int. Cl.: G02B 27/01

(54) **ANZEIGEVORRICHTUNG UND VERFAHREN ZUR PROJEKTION VON ANZEIGEINFORMATION IN EINEM FAHRZEUG**
DISPLAY DEVICE AND METHOD FOR PROJECTING DISPLAY INFORMATION IN A VEHICLE
DISPOSITIF D'AFFICHAGE ET PROCÉDÉ DE PROJECTION D'INFORMATIONS D'AFFICHAGE DANS UN VÉHICULE

(30) Priorität: 08.03.2017 DE 102017002229
(43) Veröffentlichungstag der Anmeldung: 15.01.2020
(73) Patentinhaber: vision optics GmbH, 09120 Chemnitz (DE)
(72) Erfinder: DITTRICH, Ronald, 01307 Dresden (DE)
(74) Vertreter: v. Bezold & Partner Patentanwälte - PartG mbB
(86) Internationale Anmeldenummer: PCT/EP2018/055137
(87) Internationale Veröffentlichungsnummer: WO 2018/162337

(56) Entgegenhaltungen:
- WO-A1-2015/173556
- DE-A1- 4 323 571
- DE-A1-102007 022 247
- US-A- 4 932 731
- US-A1- 2002 109 648
- US-A1- 2012 099 170
- US-A1- 2015 029 567
- US-A1- 2015 116 799

## Beschreibung

Die Erfindung betrifft eine Anzeigevorrichtung (Head-Up-Display) für ein Fahrzeug, insbesondere eine Anzeigevorrichtung zur Projektion von Anzeigeinformation im Sichtfeld eines Nutzers des Fahrzeugs unter Verwendung einer Hologrammeinrichtung. Des Weiteren betrifft die Erfindung ein Verfahren zur Projektion von Anzeigeinformation im Sichtfeld eines Nutzers eines Fahrzeugs und ein mit der Anzeigevorrichtung ausgestattetes Fahrzeug. Anwendungen der Erfindung sind insbesondere in der Fahrzeugtechnik, z B. in Kraftfahrzeugen zum Personen- und/oder Lasttransport oder Schienenfahrzeugen oder Luftfahrzeugen oder Wasserfahrzeugen, gegeben.

Head-Up-Displays zur Anzeige von Informationen im Sichtfeld des Fahrers in Kraftfahrzeugen sind allgemein bekannt. Herkömmliche Head-Up-Displays umfassen typischerweise eine Bildgebungseinrichtung in Gestalt eines Projektors und eine Abbildungsoptik. Mit dem Projektor wird ein Lichtfeld erzeugt, das die zu präsentierende Information trägt. Mit der Abbildungsoptik wird das Lichtfeld so in das Sichtfeld des Fahrers abgebildet, dass auf der vom Fahrer abgewandten Seite der Frontscheibe des Fahrzeugs ein virtuelles Bild erzeugt wird, was ein ermüdungsfreies Ablesen der Information durch den Fahrer ermöglicht.

Die Abbildungsoptik kann mit optischen Linsen und Spiegeln aufgebaut sein, was jedoch Nachteile aufgrund der hohen Kosten (Bildung von Freiform-Optik), des Platzbedarfs und des Gewichts der Abbildungsoptik ergibt. Es wurde daher vorgeschlagen, optische Linsen und Spiegel durch Hologramme zu ersetzen, wie z.B. in EP 286 962 A2 beschrieben und in Figur 3 (Stand der Technik) beispielhaft gezeigt ist. Gemäß Figur 3 umfasst das herkömmliche Head-Up-Display 10' einen Projektor 20' und Hologramme 31', 32', die im Armaturenbrett 81' des Fahrzeugs 80' oberhalb vom Projektor 20' angeordnet sind. Mit den Hologrammen 31', 32' wird das Lichtfeld des Projektors 20' als virtuelles Bild 3' der Anzeigeinformation auf die vom Fahrer 1' abgewandte Seite der Frontscheibe 82' abgebildet.

Mit den Hologrammen 31', 32' werden zwar Nachteile von herkömmlichen Abbildungsoptiken mit optischen Linsen und Spiegeln vermindert, da die Hologramme 31', 32' als kurzbrennweitige Optiken mit geringem Gewicht und geringem Platzbedarf ausgeführt werden können. Von Nachteil ist jedoch, dass die Hologramme 31', 32' in Abhängigkeit von den geometrischen Bedingungen im Fahrzeug 80', wie z.B. der Krümmung der Frontscheibe 82' konfiguriert sein müssen. Dies bedeutet, dass für jeden Fahrzeugtyp eine gesonderte Anfertigung eines Head-Up-Displays 10' mit spezifischen, an den Fahrzeugtyp angepassten Eigenschaften erforderlich ist, was sich auf die Kosten der herkömmlichen Head-Up-Displays nachteilig auswirkt. Ein weiteres Problem besteht darin, dass im Armaturenbrett in der Regel nur wenig Platz verfügbar ist, so dass es auch im Fall der Verwendung von Hologrammen eine konstruktive Herausforderung ist, das Head-Up-Display in das Armaturenbrett zu integrieren. Des Weiteren besteht im Armaturenbrett nur ein beschränkter Zugriff auf das Head-Up-Display, so dass kaum Nachjustierungen, etwa zur Anpassung an die Kopfhöhe des Fahrers, möglich sind.

Aus DE 100 36 570 A1 ist eine Anzeigevorrichtung für ein Fahrzeug bekannt, die eine Projektionseinheit oberhalb des Fahrers und eine Anzeigefläche zur Darstellung oder Erzeugung eines von der Projektionseinheit erzeugten reellen Bildes umfasst. Die Anzeigefläche kann eine reflektierende Mikrostruktur z. B. mit Prismen oder Sägezahnformen zur gerichteten Lichtumlenkung aufweisen. Die Mikrostruktur kann sich nachteilig auf die Bildqualität auswirken.

Weitere Anzeigevorrichtungen für Fahrzeuge, bei denen ein virtuelles Bild zur Betrachtung durch den Nutzer des jeweiligen Fahrzeugs mit einem Hologramm erzeugt wird, sind aus DE 10 2007 022 247 A1, US 4 932 731 A, US 2002/109648 A1 und DE 43 23 571 A1 bekannt. In WO 2015/173556 A1 wird eine Anzeigevorrichtung beschrieben, bei der mit einem gepixelten Phasenhologramm die abzubildende Anzeigeinformation zur Anzeige von monochromatischen oder mehrfarbigen Bildern generiert wird.

Ein weiteres generelles Problem von Hologramm-basierten Head-Up-Displays besteht in deren Temperaturempfindlichkeit. Beispielsweise kann die Temperatur in einem Kraftfahrzeug in einem weiten Bereich, z.B. über bis zu 80 Grad variieren. Die Beugungseigenschaften von Hologrammen und damit die Abbildungseigenschaften der Abbildungsoptik können sich jedoch in Abhängigkeit von der Umgebungstemperatur verändern, so dass bei extremen Temperaturschwankungen Störungen der Anzeige auftreten können. Des Weiteren erfordern die Hologramme die Verwendung von Laser-Projektoren, bei denen eine Drift von Emissionswellenlängen in Abhängigkeit von der Betriebstemperatur auftreten kann.

Die genannten Probleme treten nicht nur bei Head-Up-Displays für Kraftfahrzeuge, sondern auch bei anderen Anwendungen, wie z.B. in Flugzeugen oder Schiffen auf.

Die Aufgabe der Erfindung ist es, eine verbesserte Anzeigevorrichtung bereitzustellen, mit der Nachteile herkömmlicher Techniken vermieden werden. Die Anzeigevorrichtung soll sich insbesondere durch einen vereinfachten Aufbau auszeichnen, Beschränkungen beim Einbau in ein Fahrzeug vermeiden, eine Nachrüstung von Fahrzeugen ermöglichen und/oder eine verbesserte Bildqualität, insbesondere unabhängig von der Umgebungs- und/oder Betriebstemperatur und/ oder dem Umgebungslicht, ermöglichen. Weitere Aufgaben der Erfindung bestehen darin, ein entsprechend verbessertes Verfahren zur Projektion von Anzeigeinformation im Sichtfeld des Nutzers eines Fahrzeugs und ein mit einer Anzeigevorrichtung ausgestattetes Fahrzeug bereitzustellen, mit denen Nachteile herkömmlicher Techniken vermieden werden.

Diese Aufgaben werden durch eine Anzeigevorrichtung, ein Verfahren zur Projektion von Anzeigeinformation im Sichtfeld eines Nutzers eines Fahrzeugs und ein Fahrzeug mit den Merkmalen der unabhängigen Ansprüche gelöst. Vorteilhafte Ausführungsformen und Anwendungen der Erfindung ergeben sich aus den abhängigen Ansprüchen.

Gemäß einem ersten allgemeinen Gesichtspunkt der Erfindung wird die oben genannte Aufgabe durch eine Anzeigevorrichtung gelöst, die zur Projektion von Anzeigeinformation im Sichtfeld eines Nutzers eines Fahrzeugs mit einem Armaturenbrett und einer Sichtscheibe, z. B. Frontscheibe, konfiguriert ist. Die Anzeigevorrichtung umfasst eine Bildgebungseinrichtung zur Erzeugung eines Lichtfeldes, eine Hologrammeinrichtung zur Umlenkung des Lichtfeldes zu der Sichtscheibe und zur Erzeugung eines virtuellen Bildes auf der Außenseite des Fahrzeugs und eine Steuereinrichtung zur Steuerung der Bildgebungseinrichtung. Mit der Steuereinrichtung wird die Bildgebungseinrichtung so gesteuert, dass das erzeugte Lichtfeld die zu präsentierende Information (Anzeigeinformation) trägt. Die Bildgebungseinrichtung ist zur Erzeugung eines monochromatischen oder mehrfarbigen Lichtfeldes konfiguriert. Die Hologrammeinrichtung enthält mindestens ein optisches Hologramm, das für eine Anordnung in einem Bereich unterhalb des Sichtfeldes des Nutzers, insbesondere unterhalb des in Blickrichtung des Nutzers befindlichen Bereichs der Sichtscheibe konfiguriert ist. In einem Fahrzeug ist die Hologrammeinrichtung unterhalb der Frontscheibe angeordnet. Das Sichtfeld ist der Raumwinkelbereich, in den der Blick des Nutzers bei Betrieb des Fahrzeugs gerichtet ist. Typischerweise ist der Nutzer ein Fahrer (oder ein Pilot oder Schiffsführer). Die Anzeigevorrichtung kann aber auch für eine andere Person, wie z. B. für einen Beifahrer in einem Fahrzeug konfiguriert sein. Die Anzeigevorrichtung ist mit der Hologrammeinrichtung so gebildet, dass ein reelles Zwischenbild, das die Anzeigeinformation beinhaltet, zur Erzeugung des virtuellen Bildes auf der Außenseite des Fahrzeugs zu der Sichtscheibe umgelenkt wird. Vorzugsweise umfasst die Hologrammeinrichtung eine glatte (geometrisch unstrukturierte) Schicht, besonders bevorzugt aus einer Vielzahl von Teilschichten, in der das optische Hologramm durch Brechzahlunterschiede im Schichtmaterial gebildet ist (Phasen-Volumen-Hologramm). Vorteilhafterweise wird damit eine hohe Bildqualität erzielt.

Gemäß der Erfindung ist die Hologrammeinrichtung so gebildet, dass das virtuelle Bild erzeugt wird, wenn die Bildgebungseinrichtung auf einer zum Sichtfeld des Nutzers weisenden Seite der Hologrammeinrichtung angeordnet ist. Die Hologrammeinrichtung ist so gebildet, dass, wenn sich die Bildgebungseinrichtung an einer Position gemäß einer Anordnung im Fahrzeug oberhalb der Hologrammeinrichtung befindet, das virtuelle Bild im Sichtfeld des Nutzers erzeugt wird. In einem Fahrzeug ist die Bildgebungseinrichtung so angeordnet, dass das Lichtfeld von oben auf die Hologrammeinrichtung gerichtet wird. Die Bildgebungseinrichtung ist oberhalb der Hologrammeinrichtung, insbesondere oberhalb der flächenhaften Ausdehnung des mindestens einen Hologramms angeordnet.

Des Weiteren enthält die Hologrammeinrichtung gemäß der Erfindung ein einziges breitbandiges RGB-Hologramm. In diesem Fall ergeben sich Vorteile für einen einfachen Aufbau der Hologrammeinrichtung. Alternativ umfasst die Hologrammeinrichtung gemäß der Erfindung einen Stapel von mehreren schmalbandigen Hologrammen, die jeweils für verschiedene Wellenlängen ausgelegt sind. Mit diesen Merkmalen ergeben sich Vorteile für die Bildqualität, insbesondere die Farbqualität des virtuellen Bilds der Anzeigeinformation.

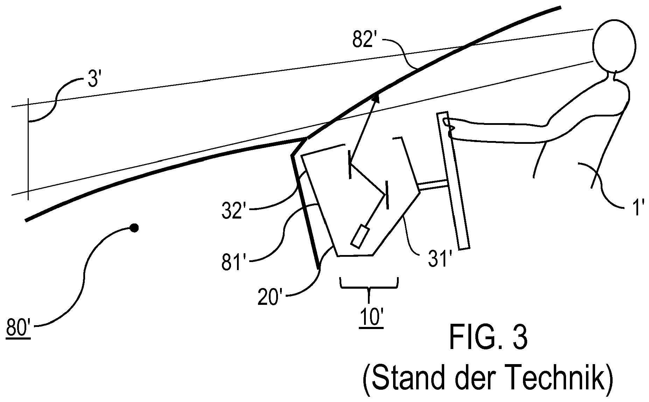

Vorteilhafterweise ermöglicht die Bestrahlung der Hologrammeinrichtung von oben die Vermeidung zahlreicher Beschränkungen der herkömmlichen Anzeigevorrichtungen, z.B. gemäß Figur 3. So ist der Einbau der Anzeigevorrichtung in das Innere des Armaturenbretts des Fahrzeugs nicht erforderlich. Die Bildgebungseinrichtung und die Hologrammeinrichtung können platzsparend außerhalb des Armaturenbretts angeordnet sein. Damit wird der Einbau der Anzeigevorrichtung in ein Fahrzeug oder dessen Nachrüstung mit einer Anzeigevorrichtung vereinfacht.

Gemäß einer bevorzugten Ausführungsform der Erfindung ist die Hologrammeinrichtung so gebildet, dass das virtuelle Bild erzeugt wird, wenn die Bildgebungseinrichtung in einem Fahrzeug oberhalb des Armaturenbretts des Fahrzeugs angeordnet ist. Vorteilhafterweise bestehen in Fahrzeugen, insbesondere in Kraftfahrzeugen, vielfältige Möglichkeiten, die Bildgebungseinrichtung außerhalb des Sichtfeldes des Nutzers, z.B. im Bereich des Fahrzeugdachs oder z.B. der A-Säule anzuordnen. Besonders bevorzugt ist eine Ausführungsform der Erfindung, bei der die Bildgebungseinrichtung für eine Positionierung an einer Rückspiegeleinheit des Fahrzeuges, insbesondere für eine Integration in die Rückspiegeleinheit, ausgelegt ist. Die Rückspiegeleinheit ist im Fahrzeuginnenraum, typischerweise in der Mitte über dem Armaturenbrett angeordnet. Bei Positionierung der Bildgebungseinrichtung an der Rückspiegeleinheit wird das Lichtfeld vorzugsweise aus einem Bereich oberhalb, in Blickrichtung vor und seitlich zum Sichtfeld des Kopfes des Nutzers auf die Hologrammeinrichtung gerichtet. Vorteilhafterweise ist an der Rückspiegeleinheit ausreichend Platz zum Einbau der Bildgebungseinrichtung und gegebenenfalls einer Bildhöhenstelleinrichtung, verfügbar.

Gemäß einer weiteren bevorzugten Ausführungsform der Erfindung ist die Bildgebungseinrichtung eine Projektoreinrichtung mit einem Projektor, der zur Erzeugung des Lichtfeldes eingerichtet ist, und mit einem Zwischenbildschirm, der zur Erzeugung eines realen Zwischenbildes des von der Projektoreinrichtung emittierten Lichtfeldes konfiguriert ist. Der Projektor ist vorzugsweise ein Laser-Projektor. Der Zwischenbildschirm kann z.B. eine Mattscheibe (Diffusorschirm) mit einer ungerichteten Abstrahlcharakteristik umfassen. Bei dieser Variante ergeben sich Vorteile durch den einfachen Aufbau und geringe Kosten des Diffusorschirms. Alternativ kann der Zwischenbildschirm ein Hologramm, insbesondere Transmissions- oder Reflexions-Hologramm, mit einer gerichteten Abstrahlung umfassen. In diesem Fall wird das Licht des realen Zwischenbildes gerichtet zur Hologrammeinrichtung gelenkt, was sich vorteilhaft auf die Helligkeit des mit der Anzeigevorrichtung erzeugten Bildes bzw. die Ausnutzung des von dem Projektor erzeugten Lichtfelds auswirkt. Beispielsweise kann ohne Beeinträchtigung der Helligkeit des angezeigten virtuellen Bildes ein Projektor mit einer relativ geringen Lichtleistung verwendet werden. Der Diffusorschirm oder das Zwischenbildschirm-Hologramm kann eben oder gekrümmt sein. Eine Krümmung wird so gewählt, dass ggf. auftretende, nachfolgende Verzerrungen des Lichtfeldes bei den Reflexionen am Hologramm und der Sichtscheibe kompensiert werden.

Gemäß einer alternativen Ausführungsform der Erfindung umfasst die Bildgebungseinrichtung einen Flüssigkristall-Bildschirm, der zur Erzeugung des Lichtfeldes eingerichtet ist, mit einer schmalbandigen, monochromatischen oder mehrfarbigen Rückbeleuchtungsquelle. Der Flüssigkristall-Bildschirm ist zur Anzeige eines realen Bildes eingerichtet, welches das Lichtfeld repräsentiert. Die Schmalbandigkeit der Rückbeleuchtung ist so gewählt, dass die Hologrammeinrichtung die gerichtete, fokussierte Erzeugung des virtuellen Bildes ermöglicht. Die Rückbeleuchtungsquelle umfasst z. B. eine Laser-Rückbeleuchtungsquelle.

Vorzugsweise umfasst die Hologrammeinrichtung ein reflektives holografisch-optisches Element (HOE), das einen gekippten Off-Axis-Hohlspiegel bildet. In einem HOE kann sich vorteilhafterweise die optische Ebene der Spiegelfunktion von der physischen Hologrammebene unterscheiden. Es ist insbesondere mindestens ein Phasen-Volumen-Hologramm vorgesehen, das den Off-Axis-Spiegel repräsentiert. Der Erfinder hat festgestellt, dass ein Nachteil der herkömmlichen Hologramme von Head-Up-Displays darin besteht, dass diese lediglich eine rein optische Funktion erfüllen und die jeweiligen Spiegel- oder Linsen-Bauteile herkömmlicher Abbildungsoptiken ersetzen. Erfindungsgemäß ist eine einzige Hologrammeinrichtung zur Lichtumlenkung ausreichend, die einen Hohlspiegel, wie z.B. einen Hohlspiegel mit einer Paraboloid- oder Ellipsoid-Form, bildet. Vorteilhafterweise kann das Phasen-Volumen-Hologramm ausschließlich in Abhängigkeit von der Gestalt des Lichtfeldes der Projektoreinrichtung, der Position der Bildgebungseinrichtung und der Position des gewünschten virtuellen Bildes im Sichtfeld des Nutzers und unabhängig von der Form des Armaturenbretts und der Windschutzscheibe konfiguriert sein. Dies ermöglicht eine vom Fahrzeugtyp unabhängige Gestaltung der erfindungsgemäßen Anzeigevorrichtung, was sich vorteilhaft auf deren Kosten auswirkt.

Gemäß einer weiteren bevorzugten Ausführungsform der Erfindung ist die Hologrammeinrichtung für eine freiliegende Anordnung an einer Oberfläche des Armaturenbretts des Fahrzeuges gebildet. Die Hologrammeinrichtung ist z. B. unmittelbar auf der Oberfläche des Armaturenbretts befestigt oder mit einem Träger ausgestattet, der auf der Oberfläche des Armaturenbretts befestigt ist.

Vorteilhafterweise kann die Hologrammeinrichtung mindestens ein ebenes oder ein gekrümmtes Hologramm enthalten. Ein gekrümmtes Hologramm kann beispielsweise an die Außenform des Armaturenbretts angepasst sein. Des Weiteren kann der Träger des Hologramms eben oder gekrümmt sein.

Wenn die Hologrammeinrichtung gemäß einer weiteren bevorzugten Ausführungsform der Erfindung eine entspiegelte Oberfläche aufweist, können sich Vorteile für die Vermeidung störender Reflektionen an der Hologrammeinrichtung ergeben. Die Hologrammeinrichtung kann z.B. auf der zum Halbraum über dem Armaturenbrett weisenden Seite eine Schutzschicht, z.B. aus transparentem Kunststoff oder Glas aufweisen, deren Oberfläche z.B. mit einer Antireflex-Schicht entspiegelt ist.

Gemäß einer weiteren bevorzugten Ausführungsform der Erfindung ist die Anzeigevorrichtung mit einer Temperatursensoreinrichtung zur Erfassung der Temperatur der Hologrammeinrichtung ausgestattet, wobei die Temperatursensoreinrichtung mit der Steuereinrichtung gekoppelt ist. Die Steuereinrichtung ist bei dieser Ausführungsform der Erfindung dafür ausgelegt, die Bildgebungseinrichtung in Abhängigkeit von der erfassten Temperatur der Hologrammeinrichtung zu steuern. Besonders bevorzugt wird die Bildgebungseinrichtung so gesteuert, dass das Lichtfeld in Abhängigkeit von der erfassten Temperatur derart verändert, insbesondere verschoben und/oder verformt, wird, dass eine temperaturabhängige Veränderung des virtuellen Bildes der Anzeigeinformation kompensiert wird. Vorteilhafterweise wird damit eine verzerrungsfreie Bildwiedergabe unabhängig von der Temperatur der Hologrammeinrichtung erzielt.

Vorteilhafterweise ermöglicht die Temperatursensoreinrichtung auch die Erfassung einer Schrumpfung einer Hologrammschicht der Hologrammeinrichtung, z.B. durch eine Veränderung der Polymerstruktur während der Nutzungsdauer der Anzeigevorrichtung. Die Schrumpfung der Hologrammschicht wirkt sich auf das virtuelle Bild wie eine Temperaturänderung aus und kann daher mit der Steuereinrichtung entsprechend kompensiert werden.

Vorteilhafterweise bestehen verschiedene Möglichkeiten, mit der Temperatursensoreinrichtung die Temperatur der Hologrammeinrichtung zu messen. Die Temperatursensoreinrichtung kann z.B. ein Thermoelement aufweisen, mit dem die Temperatur der Hologrammeinrichtung direkt oder die Temperatur in der unmittelbaren Umgebung der Hologrammeinrichtung gemessen wird. Alternativ kann die Temperatursensoreinrichtung einen optischen Sensor aufweisen, mit dem die Temperatur der Hologrammeinrichtung in Abhängigkeit von mindestens einer Beugungseigenschaft der Hologrammeinrichtung erfasst wird.

Gemäß einer weiteren, besonders vorteilhaften Ausführungsform der Erfindung ist die Anzeigevorrichtung mit einer Wellenlängensensoreinrichtung zur Erfassung mindestens einer Emissionswellenlänge der Bildgebungseinrichtung ausgestattet, wobei die Wellenlängensensoreinrichtung mit der Steuereinrichtung gekoppelt ist. Die Steuereinrichtung ist für eine Steuerung der Bildgebungseinrichtung in Abhängigkeit von der mindestens einen erfassten Emissionswellenlänge der Bildgebungseinrichtung ausgelegt. Mit der Steuereinrichtung kann die Bildgebungseinrichtung so angesteuert werden, dass eine wellenlängenabhängige Änderung der Beugungsrichtung der Hologrammeinrichtung und optional des Zwischenbildschirms kompensiert und das virtuelle Bild unverändert erzeugt wird. Das von der Bildgebungseinrichtung erzeugte Lichtfeld wird so verschoben und/oder verformt, dass ein vorbestimmter weißer Pixel an einer vorgegebenen Position erscheint. Mit anderen Worten, mit der Steuereinrichtung werden die Pixel so angeordnet, dass der betrachtete Pixel weiß erscheint. Vorteilhafterweise erlaubt die Wellenlängensensoreinrichtung, eine Drift der Emissionswellenlänge der Bildgebungseinrichtung in Abhängigkeit von der Betriebstemperatur und/oder einer Alterung des Projektors oder der Laser-Rückbeleuchtungsquelle zu erfassen und über die Wirkung der Steuereinrichtung zu kompensieren.

Bei Verwendung des oben genannten Zwischenbildschirms in Gestalt eines Hologramms umfasst die Wellenlängensensoreinrichtung vorzugsweise einen optischen Sensor, mit dem die Beugungsrichtung des Zwischenbildschirms erfasst wird. Die Beugungsrichtung eines Teils des Lichtfeldes der Projektoreinrichtung kann z.B. mit einem Linien- oder Flächen-CCD-Chip erfasst werden. Eine Änderung der Beugungsrichtung des Zwischenbildschirms ergibt unmittelbar eine Information über die Änderung der Emissionswellenlänge der Projektoreinrichtung. Alternativ kann die Wellenlängensensoreinrichtung an der Hologrammeinrichtung vorgesehen sein.

Die Kombination der Wellenlängensensoreinrichtung, insbesondere mit einem Linien- oder Flächen-CCD-Chip, der Bildgebungseinrichtung und der Steuereinrichtung, die zur Erfassung mindestens einer Emissionswellenlänge der Projektoreinrichtung und zur Korrektur eines von der Bildgebungseinrichtung emittierten Lichtfeldes konfiguriert sind, ist nicht nur für die erfindungsgemäße Anzeigevorrichtung, sondern auch bei der Ansteuerung von Projektoren für andere Anwendungen mit einer Erzeugung virtueller Bilder, wie z. B. in Spielgeräten, vorteilhaft. Die Kombination der Wellenlängensensoreinrichtung, der Bildgebungseinrichtung und der Steuereinrichtung mit den in der vorliegenden Beschreibung offenbarten Merkmalen wird daher auch ohne die übrigen Merkmale der Anzeigevorrichtung als ein weiterer, unabhängiger Gegenstand der Erfindung betrachtet.

Gemäß einer weiteren vorteilhaften Ausführungsform der Erfindung ist die Anzeigevorrichtung mit einer Bildhöhenstelleinrichtung zur Korrektur des virtuellen Bildes in Abhängigkeit von der Kopfhöhe des Nutzers des Fahrzeugs ausgestattet. Die Bildhöhenstelleinrichtung ist beispielsweise für eine Verstellung der Position und/oder Orientierung der Hologrammeinrichtung im Lichtfeld der Bildgebungseinrichtung und/oder zur Verstellung der Position und/oder Ausrichtung der Bildgebungseinrichtung relativ zur Hologrammeinrichtung ausgelegt. Durch eine Betätigung der Bildhöhenstelleinrichtung, z.B. mit einem manuell betätigbaren Stellelement, kann der Nutzer die Position des virtuellen Bildes entsprechend seinen Wünschen einstellen.

Gemäß einem zweiten allgemeinen Gesichtspunkt der Erfindung wird die obige Aufgabe durch ein Verfahren zur Projektion von Anzeigeinformation im Sichtfeld eines Nutzers eines Fahrzeugs gelöst, bei dem ein Lichtfeld, das die Anzeigeinformation trägt, mit einer Bildgebungseinrichtung erzeugt und mit einer Hologrammeinrichtung zur Sichtscheibe des Fahrzeugs umgelenkt wird, so dass im Sichtfeld des Nutzers ein virtuelles Bild der Anzeigeinformation erzeugt wird. Gemäß der Erfindung wird das Lichtfeld oberhalb der Hologrammeinrichtung erzeugt und von oben, d. h. in Richtung hin zum Boden, auf die Hologrammeinrichtung gelenkt. Des Weiteren enthält die Hologrammeinrichtung gemäß der Erfindung ein einziges breitbandiges RGB-Hologramm. Alternativ umfasst die Hologrammeinrichtung gemäß der Erfindung einen Stapel von mehreren schmalbandigen Hologrammen, die jeweils für verschiedene Wellenlängen ausgelegt sind. Vorzugsweise wird das Verfahren mit der Anzeigevorrichtung gemäß dem ersten allgemeinen Gesichtspunkt der Erfindung ausgeführt.

Gemäß einer bevorzugten Ausführungsform des erfindungsgemäßen Verfahrens erfolgen die Erfassung der Temperatur der Hologrammeinrichtung und eine Steuerung der Bildgebungseinrichtung in Abhängigkeit von der erfassten Temperatur. Vorteilhafterweise ermöglicht dies eine Kompensation von temperaturabhängigen Verschiebungen des virtuellen Bildes.

Gemäß einer weiteren vorteilhaften Ausführungsform des erfindungsgemäßen Verfahrens erfolgen eine Erfassung von mindestens einer Emissionswellenlänge der Bildgebungseinrichtung und eine Steuerung der Bildgebungseinrichtung in Abhängigkeit von der erfassten Emissionswellenlänge. Vorteilhafterweise werden damit Verschiebungen der Emissionswellenlänge in Abhängigkeit von der Betriebstemperatur der Bildgebungseinrichtung kompensiert und eine Verbesserung der Bildqualität des virtuellen Bildes erzielt.

Gemäß einem dritten allgemeinen Gesichtspunkt der Erfindung wird die obige Aufgabe durch ein Fahrzeug gelöst, das mit einer Anzeigevorrichtung gemäß dem ersten allgemeinen Gesichtspunkt der Erfindung ausgestattet ist. Vorteilhafterweise ist die Erfindung mit verschiedenen Fahrzeugtypen realisierbar. Vorzugsweise umfasst das Fahrzeug ein Kraftfahrzeug oder ein Luftfahrzeug (Flugzeug) oder ein Wasserfahrzeug (Schiff).

Weitere Einzelheiten der Erfindung werden im Folgenden unter Bezug auf die beigefügten Zeichnungen beschrieben. Es zeigen:
- Figur 1:: eine schematische Perspektivansicht einer bevorzugten Ausführungsform der erfindungsgemäßen Anzeigevorrichtung aus Sicht des Fahrers eines Kraftfahrzeugs;
- Figur 2:: eine schematische Seitenansicht mit einer Illustration des Strahlengangs einer bevorzugten Ausführungsform der erfindungsgemäßen Anzeigevorrichtung; und
- Figur 3:: eine schematische Schnittansicht einer herkömmlichen Anzeigevorrichtung (Stand der Technik).

Die Erfindung wird im Folgenden unter beispielhaftem Bezug auf die Anwendung in einem Kraftfahrzeug beschrieben, wobei mit der Anzeigevorrichtung dem Fahrer des Kraftfahrzeugs Anzeigeinformation in seinem Sichtfeld präsentiert wird. Die Erfindung ist nicht auf die Anwendung im Kraftfahrzeug beschränkt, sondern entsprechend auch z.B. in einem Flugzeug oder einem Schiff verwendbar. Merkmale der Erfindung werden hier insbesondere unter Bezug auf die Anordnung der Hologrammeinrichtung und der Bildgebungseinrichtung und des Strahlengangs zur Erzeugung des virtuellen Bildes der Anzeigeinformation beschrieben. Einzelheiten der Herstellung der Hologrammeinrichtung und der Erzeugung des Hologramms werden nicht beschrieben, da diese an sich aus dem Stand der Technik bekannt sind.

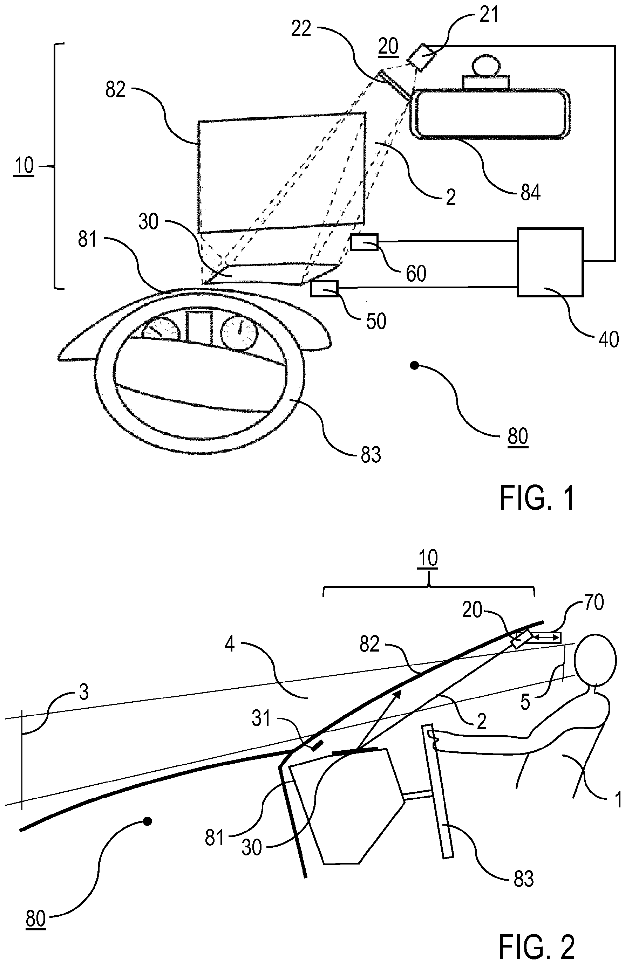

Gemäß den Figuren 1 und 2 umfasst die bevorzugte Ausführungsform der erfindungsgemäßen Anzeigevorrichtung 10, die Bildgebungseinrichtung 20 und die Hologrammeinrichtung 30, die im Fahrerraum eines Fahrzeugs 80 angeordnet sind. Die Bildgebungseinrichtung 20 ist mit einer Steuereinrichtung 40 verbunden, die z. B. einen Computer-Schaltkreis umfasst und/oder in die Fahrzeugelektronik integriert ist. Die Figuren 1 und 2 zeigen schematisch einen Teil des Armaturenbretts 81 und der Frontscheibe 82 sowie das Lenkrad 83 des Fahrzeugs 80.

Zur Projektion von Anzeigeinformation im Sichtfeld 2 des Fahrers 1 wird das Lichtfeld 2, das die Anzeigeinformation trägt, mit der Bildgebungseinrichtung 20 von oben auf die Hologrammeinrichtung 30 gerichtet und mit dieser zu der Frontscheibe 82 im Sichtfeld 2 des Fahrers 1 umgelenkt, so dass das virtuelle Bild 3 der Anzeigeinformation auf der Außenseite der Frontscheibe 82 erzeugt wird.

Die Bildgebungseinrichtung 20 umfasst, wie schematisch in Figur 1 gezeigt ist, einen Laserprojektor 21, wie z.B. einen RGB-Laserprojektor (z.B. vom Typ Pico-Projektor), der Laserquellen, insbesondere Laserdioden, mit drei verschiedenen Emissionswellenlängen im roten, grünen und blauen Spektralbereich enthält. Die Laserquellen werden mit der Steuereinrichtung 40 so angesteuert, dass das vom Laserprojektor 21 erzeugte Lichtfeld 2 die anzuzeigende Information, wie z.B. ein Farbbild und/oder Schriftinhalte, repräsentiert. Der Laserprojektor 21 ist mit der Steuereinrichtung verbunden, welche die Anzeigeinformation für das anzuzeigende Bild liefert.

Des Weiteren umfasst die Bildgebungseinrichtung 20 einen Zwischenbildschirm 22, z.B. in Gestalt eines Transmissionshologramms, wobei mit dem Zwischenbildschirm 22 das Lichtfeld 2 gerichtet von oben auf die Hologrammeinrichtung 30 gelenkt wird. Das Transmissionshologramm des Zwischenbildschirms 22 ist z.B. ein breitbandiges RGB-Hologramm oder ein Stapel aus mehreren schmalbandigen Hologrammen, die für die jeweiligen Emissionswellenlängen im roten, grünen und blauen Spektralbereich ausgelegt sind.

Gemäß einer alternativen Ausführungsform der Erfindung umfasst die Bildgebungseinrichtung einen Flüssigkristall-Bildschirm, der zur Erzeugung des Lichtfeldes 2 eingerichtet ist, mit einer schmalbandigen Rückbeleuchtungsquelle (nicht dargestellt). Bei dieser Ausführungsform werden der Projektor 21 durch die Rückbeleuchtungsquelle und der Zwischenbildschirm 22 durch den Flüssigkristall-Bildschirm ersetzt. In diesem Fall erhält der Flüssigkristall-Bildschirm die Anzeigeinformation für das anzuzeigende Bild von der Steuereinrichtung.

Die Hologrammeinrichtung 30 ist auf der Oberseite des Armaturenbretts 81 angeordnet, und sie umfasst einen Stapelaufbau, z.B. mit einem Filmträger als Trägerschicht, einer Hologrammschicht, die das Phasen-Volumen-Hologramm zur Umlenkung des Lichtfeldes und zur Erzeugung des virtuellen Bildes 3 enthält, und einer Deckschicht, die dem Schutz und der Entspiegelung der Hologrammeinrichtung dient. Die einzelnen Schichten können z.B. aus einem transparenten Kunststoff und/oder Glas hergestellt sein. Die Hologrammschicht ist typischerweise eine Kunststoffschicht, in die das Hologramm eingeschrieben ist.

Die Hologrammschicht der Hologrammeinrichtung 30 umfasst ein Reflexionshologramm. Dieses hat die Aufgabe, das Zwischenbild der Bildgebungseinrichtung 20 am Zwischenbildschirm 22 so auf die Frontscheibe abzubilden, dass dieses genau in Richtung der Augen des Fahrers 1 reflektiert wird. Das Licht soll aber nur in Richtung des Kopfes abgestrahlt werden, um mit möglichst wenig Licht auszukommen. Daher ist die Hologrammgeometrie von der Lage der Bildgebungseinrichtung, des Kopfes des Fahrers und der Geometrie der Frontscheibe abhängig. Die Position des Kopfes des Fahrers 1 wird durch die "eye box" 5 (Bereich, in dem sich die Augen des Fahrers 1 mit einer durchschnittlichen Körpergröße befinden) präsentiert. Basierend auf diesen Parametern wird die Beugungsgittergeometrie des Reflexionshologramms mit an sich bekanntem Verfahren berechnet. Um die berechnete Gitterstruktur in der Hologrammschicht zu erzeugen, wird ein holographisches Filmmaterial mit kohärenten und geometrisch entsprechend geformten Wellenfronten mit Lasern vorgegebener Wellenlängen belichtet. Die Belichtung erfolgt in an sich bekannter Weise, vorzugsweise auf einem schwingungsfreien optischen Tisch.

Die Größe der Hologrammeinrichtung 30 bestimmt die Größe des virtuellen Bildes 3 im Sichtfeld des Fahrers 1 und wird entsprechend in Abhängigkeit von der konkreten Anwendung der Erfindung gewählt. Die Form der Hologrammeinrichtung 30 kann gewölbt oder eben sein, wobei gegebenenfalls zur Anpassung an die Form der Oberfläche des Armaturenbretts 81 ein Träger zwischen der Oberfläche des Armaturenbretts 81 und der Hologrammeinrichtung 30 vorgesehen ist. Zusätzlich kann, wie in Figur 2 schematisch gezeigt ist, die Hologrammeinrichtung 30 mit einem opaken Blockierschirm 31 ausgestattet sein, der zwischen der Hologrammeinrichtung 30 und der Innenseite der Frontscheibe 82 angeordnet ist. Der Blockierschirm 31 ist so konfiguriert, dass unerwünschte direkte Reflexionen von der Hologrammeinrichtung 30 auf die Frontscheibe 82 vermieden werden.

Das Hologramm der Hologrammeinrichtung 30 ist so konfiguriert, dass im Sichtfeld 4 des Nutzers 1 das virtuelle Bild 3 auf der Außenseite der Frontscheibe 82 erzeugt wird. Um Bildfehler durch Variationen der Temperatur der Hologrammeinrichtung 30 und/oder der Betriebstemperatur der Bildgebungseinrichtung 20 zu vermeiden, ist die erfindungsgemäße Anzeigevorrichtung 10 mit einer Temperatursensoreinrichtung 50 und/oder einer Wellenlängensensoreinrichtung 60 ausgestattet (in Figur 1 schematisch gezeigt). Mit der Temperatursensoreinrichtung 50, z. B. einem Thermoelement wird die Temperatur der Hologrammeinrichtung 30 erfasst. Basierend auf einem Ausgangssignal der Temperatursensoreinrichtung 50 wird mit der Steuereinrichtung 40 die Bildgebungseinrichtung 20 so angesteuert, dass temperaturabhängige Verschiebungen des virtuellen Bildes 3 kompensiert werden.

Die Wellenlängensensoreinrichtung 60 umfasst einen CCD-Chip, der dem Zwischenbildschirm 22 nachgeordnet ist und mit dem ein Teil des Lichtfeldes 2, wie z.B. ein einzelner Pixel im realen Zwischenbild auf dem Transmissionshologramm des Zwischenbildschirms 22 erfasst wird. Mit der Steuereinrichtung 40 wird das Lichtfeld 2 der Bildgebungseinrichtung 20 so verschoben, dass der betrachtete Pixel mit dem CCD-Chip an einer gewünschten Sollposition erfasst wird.

Figur 2 illustriert des Weiteren schematisch eine optional vorgesehene Bildhöhenstelleinrichtung 70, mit der die Bildgebungseinrichtung 20 gekoppelt ist. Mit der Bildhöhenstelleinrichtung 70 kann die Bildgebungseinrichtung 20 so verschoben werden, dass das virtuelle Bild 3 in der gewünschten Sichthöhe im Sichtfeld 4 des Fahrers 1 (entsprechend seiner "eye box" 5) präsentiert wird. Die Verstellung der Bildhöhe wird z. B. mit einer Verschiebung der Bildgebungseinrichtung 20 erzielt. Die Bildgebungseinrichtung 20 kann z.B. an der Rückspiegeleinheit 84 auf einer Schiene verschiebbar und die Bildhöhenstelleinrichtung 70 für eine manuelle Verschiebung der Bildgebungseinrichtung 20 auf der Schiene ausgelegt sein.

## Patentansprüche

1. Anzeigevorrichtung (10), die zur Anordnung in einem Fahrzeug (80) mit einem Armaturenbrett (81) und einer Sichtscheibe (82) und zur Projektion von Anzeigeinformation im Sichtfeld eines Nutzers (1) des Fahrzeugs (80) konfiguriert ist, umfassend:
- eine Bildgebungseinrichtung (20), die zur Erzeugung eines Lichtfeldes (2) eingerichtet ist, welches die Anzeigeinformation trägt,
- eine Hologrammeinrichtung (30), die bei einer Anordnung unterhalb des Sichtfelds (4) des Nutzers (1) zur Umlenkung des Lichtfeldes (2) zu der Sichtscheibe (82) und zur Erzeugung eines virtuellen Bildes (3) der Anzeigeinformation im Sichtfeld (4) des Nutzers (1) eingerichtet ist, und
- eine Steuereinrichtung (40), die zur Ansteuerung der Bildgebungseinrichtung (20) eingerichtet ist, wobei
- die Hologrammeinrichtung (30) für die Erzeugung des virtuellen Bildes (3) konfiguriert ist, wenn die Bildgebungseinrichtung (20) oberhalb, auf einer zum Sichtfeld (4) des Nutzers (1) weisenden Seite der Hologrammeinrichtung (30) angeordnet ist,
**dadurch gekennzeichnet, dass**
- die Hologrammeinrichtung (30) ein breitbandiges RGB-Hologramm oder einen Stapel von mehreren schmalbandigen Hologrammen umfasst, die für verschiedene Wellenlängen ausgelegt sind.

2. Anzeigevorrichtung gemäß Anspruch 1, bei der
- die Anzeigevorrichtung (10) zur Anordnung in einem Kraftfahrzeug (80) mit einer Rückspiegeleinheit (84) konfiguriert ist, und
- die Hologrammeinrichtung (30) für die Erzeugung des virtuellen Bildes (3) bei einer Anordnung der Bildgebungseinrichtung (20) an der Rückspiegeleinheit (84) des Fahrzeugs (80) konfiguriert ist.

3. Anzeigevorrichtung gemäß einem der vorhergehenden Ansprüche, bei der
- die Bildgebungseinrichtung (20) eine Projektoreinrichtung mit einem Projektor (21), der zur Erzeugung des Lichtfeldes (2) eingerichtet ist, und einem Zwischenbildschirm (22) umfasst, der zur Erzeugung eines realen Zwischenbildes des von dem Projektor (21) emittierten Lichtfeldes (2) konfiguriert ist.

4. Anzeigevorrichtung gemäß Anspruch 3, bei der
- der Zwischenbildschirm (22) ein Hologramm umfasst, das zur gerichteten Lenkung des Lichtfeldes (2) von der Projektoreinrichtung (20) auf die Hologrammeinrichtung (30) gebildet ist.

5. Anzeigevorrichtung gemäß einem der Ansprüche 1 bis 2, bei der
- die Bildgebungseinrichtung (20) einen Flüssigkristall-Bildschirm, der zur Erzeugung des Lichtfeldes (2) eingerichtet ist, mit einer schmalbandigen Rückbeleuchtung umfasst.

6. Anzeigevorrichtung gemäß einem der vorhergehenden Ansprüche, bei der
- die Hologrammeinrichtung (30) ein reflektives holografisch-optisches Element umfasst, das einen gekippten Off-Axis-Spiegel bildet, und
- die Hologrammeinrichtung (30) mindestens ein Phasen-Volumen-Hologramm enthält, das den Off-Axis-Spiegel repräsentiert.

7. Anzeigevorrichtung gemäß einem der vorhergehenden Ansprüche, bei der
- die Hologrammeinrichtung (30) für eine freiliegende Anordnung an einer Oberfläche des Armaturenbretts (81) des Fahrzeugs (80) konfiguriert ist.

8. Anzeigevorrichtung gemäß einem der vorhergehenden Ansprüche, bei der
- die Hologrammeinrichtung (30) eine entspiegelte Oberfläche aufweist.

9. Anzeigevorrichtung gemäß einem der vorhergehenden Ansprüche, umfassend
- eine Temperatursensoreinrichtung (50), die zur Erfassung der Temperatur der Hologrammeinrichtung (30) ausgelegt und mit der Steuereinrichtung (40) gekoppelt ist, wobei die Steuereinrichtung (40) dazu ausgelegt ist, die Bildgebungseinrichtung (20) in Abhängigkeit von der erfassten Temperatur der Hologrammeinrichtung (30) so zu steuern, dass das von der Bildgebungseinrichtung (20) erzeugte Lichtfeld (2) in Abhängigkeit von der erfassten Temperatur verschoben und/oder verformt und eine temperaturabhängige Veränderung des virtuellen Bildes (3) der Anzeigeinformation kompensiert wird.

10. Anzeigevorrichtung gemäß Anspruch 9, bei der
- die Temperatursensoreinrichtung (50) zur Erfassung der Temperatur in Abhängigkeit von mindestens einer Beugungseigenschaft der Hologrammeinrichtung (30) ausgelegt ist.

11. Anzeigevorrichtung gemäß einem der vorhergehenden Ansprüche, umfassend
- eine Wellenlängensensoreinrichtung (60), die zur Erfassung mindestens einer Emissionswellenlänge der Bildgebungseinrichtung (20) ausgelegt und mit der Steuereinrichtung (40) gekoppelt ist, wobei
- die Steuereinrichtung (40) dazu ausgelegt ist, die Bildgebungseinrichtung (20) in Abhängigkeit von der erfassten mindestens einen Emissionswellenlänge der Bildgebungseinrichtung (20) so zu steuern, dass das von der Bildgebungseinrichtung (20) erzeugte Lichtfeld (2) in Abhängigkeit von der erfassten mindestens einen Emissionswellenlänge verschoben und/oder verformt und eine wellenlängenabhängige Änderung der Beugungsrichtung der Hologrammeinrichtung (30) kompensiert wird.

12. Anzeigevorrichtung gemäß einem der vorhergehenden Ansprüche, umfassend
- eine Bildhöhenstelleinrichtung (70), die zur Anpassung der Position des virtuellen Bildes (3) an die Kopfhöhe des Nutzers (1) ausgelegt ist.

13. Verfahren zur Projektion von Anzeigeinformation im Sichtfeld eines Nutzers (1) eines Fahrzeugs (80), umfassend die Schritte:
- Erzeugung eines Lichtfeldes (2), welches die Anzeigeinformation trägt, mit einer Bildgebungseinrichtung (20), und
- Umlenkung des Lichtfeldes (2) zu einer Sichtscheibe (81) des Fahrzeugs (80) im Sichtfeld des Nutzers (1) und Erzeugung eines virtuellen Bildes (3) der Anzeigeinformation auf der vom Nutzer (1) abgewandten Seite der Sichtscheibe (81) mit einer Hologrammeinrichtung (30), die in einem Bereich unterhalb des Sichtfeldes des Nutzers (1) angeordnet ist, wobei
die Bildgebungseinrichtung (20) oberhalb, auf einer zum Sichtfeld des Nutzers (1) weisenden Seite der Hologrammeinrichtung (30) angeordnet ist,
**dadurch gekennzeichnet, dass**
- die Hologrammeinrichtung (30) ein breitbandiges RGB-Hologramm oder einen Stapel von mehreren schmalbandigen Hologrammen umfasst, die für verschiedene Wellenlängen ausgelegt sind.

14. Verfahren gemäß Anspruch 13, mit den Schritten
- Erfassung der Temperatur der Hologrammeinrichtung (30), und Steuerung der Bildgebungseinrichtung (20) in Abhängigkeit von der erfassten Temperatur der Hologrammeinrichtung (30), und/oder
- Erfassung mindestens einer Emissionswellenlänge der Bildgebungseinrichtung (20), und Steuerung der Bildgebungseinrichtung (20) in Abhängigkeit von der erfassten mindestens einen Emissionswellenlänge der Projektoreinrichtung (20).

15. Fahrzeug (80), das mit einer Anzeigevorrichtung (10) gemäß einem der Ansprüche 1 bis 12 ausgestattet ist.

## Claims

1. Display device (10) configured for an arrangement in a vehicle (80) having a dashboard (81) and a viewing window (82) and for projecting displaying information in the field of view of a user (1) of the vehicle (80), comprising:
- an imaging device (20) being adapted to generate a light field (2) carrying the display information,
- a hologram device (30) which, with an arrangement below the field of view (4) of the user (1), is adapted for deflecting the light field (2) to the viewing screen (82) and for generating a virtual image (3) of the display information in the field of view (4) of the user (1), and
- a control device (40) being adapted for controlling the imaging device (20), wherein
- the hologram device (30) is configured for generating the virtual image (3) when the imaging device (20) is arranged above and on a side facing to the field of view (4) of the user (1) of the hologram device (30),
**characterized in that**
- the hologram device (30) comprises a broadband RGB hologram or a stack of multiple narrowband holograms which are adapted for different wavelengths.

2. Display device according to claim 1, wherein
- the display device (10) is configured for an arrangement in a motor vehicle (80) having a rearview mirror unit (84), and
- the hologram device (30) is configured for generating the virtual image (3), when the imaging device (20) is arranged on the rear-view mirror unit (84) of the vehicle (80).

3. Display device according to one of the preceding claims, wherein
- the imaging device (20) comprises a projector device with a projector (21) adapted for generating the light field (2), and an intermediate screen (22) adapted for generating a real intermediate image of the light field (2) emitted by the projector (21).

4. Display device according to claim 3, wherein
- the intermediate screen (22) comprises a hologram formed for directionally directing the light field (2) from the projector device (20) to the hologram device (30).

5. Display device according to one of claims 1 to 2, wherein
- the imaging device (20) comprises a liquid crystal display screen being adapted for generating the light field (2) and having a narrow band backlight.

6. Display device according to one of the preceding claims, wherein
- the hologram device (30) comprises a reflective holographic optical element forming a tilted off-axis mirror, and
- the hologram device (30) comprises at least one phase-volume hologram representing the off-axis mirror.

7. Display device according to one of the preceding claims, wherein
- the hologram device (30) is configured for an exposed arrangement on a surface of the dashboard (81) of the vehicle (80).

8. Display device according to one of the preceding claims, wherein
- the hologram device (30) comprises an anti-reflective surface.

9. Display device according to one of the preceding claims, comprising
- a temperature sensor device (50) being adapted for detecting the temperature of the hologram device (30) and being coupled to the control device (40), the control device (40) being adapted for controlling the imaging device (20) in dependency on the detected temperature of the hologram device (30) such that the light field (2) generated by the imaging device (20) is shifted and/or
deformed in dependency on the detected temperature and a temperature-dependent change in the virtual image (3) of the display information is compensated.

10. Display device according to claim 9, wherein
- the temperature sensor device (50) is adapted for detecting the temperature in dependency on at least one a diffraction characteristic of the hologram device (30).

11. Display device according to one of the preceding claims, comprising
- a wavelength sensor device (60) being adapted for detecting at least one emission wavelength of the imaging device (20) and being coupled to the control device (40), wherein
- the control device (40) is adapted for controlling the imaging device (20) in dependency on the detected at least one emission wavelength of the imaging device (20) such that the light field (2) generated by the imaging device (20) is shifted and/or deformed in dependency on the detected at least one emission wavelength and a wavelength-dependent change of the diffraction direction of the hologram device (30) is compensated.

12. Display device according to one of the preceding claims, comprising
- an image height setting device (70) which is provided for adapting the position of the virtual image (3) to the head height of the user (1).

13. Method for projecting display information in the field of view of a user (1) of a vehicle (80), comprising the steps of:
- generating a light field (2) carrying the display information with an imaging device (20), and
- deflecting the light field (2) to a viewing window (81) of the vehicle (80) in the field of view of the user (1), and generating a virtual image (3) of the display information on the side of the viewing window (81) facing away from the user (1) by means of a hologram device (30) which is arranged in a region below the field of view of the user (1), wherein
the imaging device (20) is arranged above and on a side facing to the field of view (4) of the user (1) of the hologram device (30),
**characterized in that**
- the hologram device (30) comprises a broadband RGB hologram or a stack of multiple narrowband holograms which are adapted for different wavelengths.

14. Method according to claim 13, comprising the steps of
- detecting the temperature of the hologram device (30), and controlling the imaging device (20) in dependency on the detected temperature of the hologram device (30), and/or
- detecting at least one emission wavelength of the imaging device (20), and controlling of the imaging device (20) in dependency on the detected at least one emission wavelength of the projecting device (20).

15. Vehicle (80) being provided with a display device (10) according to one of claims 1 to 12.

## Revendications

1. Dispositif d'affichage (10) qui est configuré pour l'agencement dans un véhicule (80) avec un tableau de bord (81) et une vitre de visualisation (82) et pour la projection d'information d'affichage dans le champ de vision d'un utilisateur (1) du véhicule (80), comprenant :
- un dispositif d'imagerie (20) qui est conçu pour la génération d'un champ lumineux (2) qui porte l'information d'affichage,
- un dispositif d'hologramme (30) qui est conçu lors d'un agencement en dessous du champ de vision (4) de l'utilisateur (1) pour le renvoi du champ lumineux (2) à la vitre de visualisation (82) et pour la génération d'une image virtuelle (3) de l'information d'affichage dans le champ de vision (4) de l'utilisateur (1), et
- un dispositif de commande (40) qui est conçu pour la commande du dispositif d'imagerie (20), dans lequel
- le dispositif d'hologramme (30) est configuré pour la génération de l'image virtuelle (3), lorsque le dispositif d'imagerie (20) est agencé au-dessus, sur un côté tourné vers le champ de vision (4) de l'utilisateur (1) du dispositif d'hologramme (30),
**caractérisé en ce que**
- le dispositif d'hologramme (30) comporte un hologramme RVB à large bande ou une pile de plusieurs hologrammes à bande étroite qui sont configurés pour différentes longueurs d'onde.

2. Dispositif d'affichage selon la revendication 1, pour lequel
- le dispositif d'affichage (10) est configuré pour l'agencement dans un véhicule automobile (80) avec une unité de rétroviseur (84), et
- le dispositif d'hologramme (30) est configuré pour la génération de l'image virtuelle (3) lors d'un agencement du dispositif d'imagerie (20) au niveau de l'unité de rétroviseur (84) du véhicule (80).

3. Dispositif d'affichage selon l'une quelconque des revendications précédentes, pour lequel
- le dispositif d'imagerie (20) comporte un dispositif de projecteur avec un projecteur (21) qui est conçu pour la génération du champ lumineux (2), et un écran intermédiaire (22) qui est configuré pour la génération d'une image intermédiaire réelle du champ lumineux (2) émis par le projecteur (21).

4. Dispositif d'affichage selon la revendication 3, pour lequel
- l'écran intermédiaire (22) comporte un hologramme qui est formé pour la conduite dirigée du champ lumineux (2) du dispositif de projecteur (20) au dispositif d'hologramme (30).

5. Dispositif d'affichage selon l'une quelconque des revendications 1 à 2, pour lequel
- le dispositif d'imagerie (20) comporte un écran à cristaux liquides qui est conçu pour la génération du champ lumineux (2), avec un rétroéclairage à bande étroite.

6. Dispositif d'affichage selon l'une quelconque des revendications précédentes, pour lequel
- le dispositif d'hologramme (30) comporte un élément optique holographique réfléchissant qui forme un miroir désaxé basculé, et
- le dispositif d'hologramme (30) contient au moins un hologramme en phase volume qui représente le miroir désaxé.

7. Dispositif d'affichage selon l'une quelconque des revendications précédentes, pour lequel
- le dispositif d'hologramme (30) est configuré pour un agencement exposé au niveau d'une surface du tableau de bord (81) du véhicule (80).

8. Dispositif d'affichage selon l'une quelconque des revendications précédentes, pour lequel
- le dispositif d'hologramme (30) présente une surface antireflet.

9. Dispositif d'affichage selon l'une quelconque des revendications précédentes, comprenant
- un dispositif de capteur de température (50) qui est configuré pour la détection de la température du dispositif d'hologramme (30) et est couplé au dispositif de commande (40), dans lequel le dispositif de commande (40) est configuré afin de commander le dispositif d'imagerie (20) en fonction de la température détectée du dispositif d'hologramme (30) de sorte que le champ lumineux (2) généré par le dispositif d'imagerie (20) soit déplacé et/ou déformé en fonction de la température détectée et une modification dépendant de la température de l'image virtuelle (3) de l'information d'affichage soit compensée.

10. Dispositif d'affichage selon la revendication 9, pour lequel
- le dispositif de capteur de température (50) est configuré pour la détection de la température en fonction d'au moins une propriété de diffraction du dispositif d'hologramme (30).

11. Dispositif d'affichage selon l'une quelconque des revendications précédentes, comprenant
- un dispositif de capteur de longueur d'onde (60) qui est configuré pour la détection d'au moins une longueur d'onde d'émission du dispositif d'imagerie (20) et est couplé au dispositif de commande (40), dans lequel
- le dispositif de commande (40) est configuré afin de commander le dispositif d'imagerie (20) en fonction de l'au moins une longueur d'onde d'émission détectée du dispositif d'imagerie (20) de sorte que le champ lumineux (2) généré par le dispositif d'imagerie (20) soit déplacé et/ou déformé en fonction de l'au moins une longueur d'onde d'émission détectée et une modification dépendant de la longueur d'onde du sens de diffraction du dispositif d'hologramme (30) soit compensée.

12. Dispositif d'affichage selon l'une quelconque des revendications précédentes, comprenant
- un dispositif de réglage de hauteur d'image (70) qui est configuré pour l'adaptation de la position de l'image virtuelle (3) à la hauteur de tête de l'utilisateur (1).

13. Procédé de projection d'information d'affichage dans le champ de vision d'un utilisateur (1) d'un véhicule (80), comprenant les étapes suivantes :
- la génération d'un champ lumineux (2) qui porte l'information d'affichage, avec un dispositif d'imagerie (20), et
- le renvoi du champ lumineux (2) à une vitre de visualisation (81) du véhicule (80) dans le champ de vision de l'utilisateur (1) et la génération d'une image virtuelle (3) de l'information d'affichage sur le côté éloigné de l'utilisateur (1) de la vitre de visualisation (81) avec un dispositif d'hologramme (30) qui est agencé dans une zone en dessous du champ de vision de l'utilisateur (1), dans lequel
le dispositif d'imagerie (20) est agencé au-dessus, sur un côté tourné vers le champ de vision de l'utilisateur (1) du dispositif d'hologramme (30),
**caractérisé en ce que**
- le dispositif d'hologramme (30) comporte un hologramme RVB à large bande ou une pile de plusieurs hologrammes à bande étroite qui sont configurés pour différentes longueurs d'onde.

14. Procédé selon la revendication 13, avec les étapes suivantes :
- la détection de la température du dispositif d'hologramme (30), et la commande du dispositif d'imagerie (20) en fonction de la température détectée du dispositif d'hologramme (30), et/ou
- la détection d'au moins une longueur d'onde d'émission du dispositif d'imagerie (20), et la commande du dispositif d'imagerie (20) en fonction de l'au moins une longueur d'onde d'émission détectée du dispositif de projecteur (20).

15. Véhicule (80) qui est équipé d'un dispositif d'affichage (10) selon l'une quelconque des revendications 1 à 12.
